# EUROPÄISCHE PATENTSCHRIFT

(11) **EP 2 230 501 B1**
(45) Veröffentlichungstag und Bekanntmachung des Hinweises auf die Patenterteilung: **18.01.2012**
(21) Anmeldenummer: 10168727.5
(22) Anmeldetag: 22.10.2007
(51) Int. Cl.: B60T 1/10, B60T 7/02, B60T 13/58, B60L 7/26

(54) **Verfahren zur akustischen Qualitätskontrolle einer Brennkraftmaschine**
Acoustical quality control procedure for a combustion engine
Procédé de contrôle acoustique d'un moteur à combustion

(30) Priorität: 14.12.2006 AT 20652006
(43) Veröffentlichungstag der Anmeldung: 22.09.2010
(62) Teilanmeldung aus: 07821625.6
(73) Patentinhaber: AVL List GmbH, 8020 Graz (AT)
(72) Erfinder: Brandl, Franz, 8062, KUMBERG (AT); Brustolin, Giampietro, 10141, TURIN (IT)
(74) Vertreter: Babeluk, Michael

(56) Entgegenhaltungen:
- DE-A1-102005 007 696
- US-A- 4 040 294

## Beschreibung

Die Erfindung betrifft ein Verfahren zur akustischen Qualitätskontrolle und zur Analyse einer akustischen Signatur einer Brennkraftmaschine.

In der akustischen Qualitätskontrolle von Brennkraftmaschinen am Ende der Fertigung wird normalerweise durch subjektives Abhören der Luftschallabstrahlung einer Brennkraftmaschine bei verschiedenen Betriebszuständen (Heiß- und Kalttests) auf motorinterne Fehler (zu große Spiele, fehlende Teile, etc.) geschlossen. Das subjektive Abhören kann auch durch messtechnische Analyse des Luftschalls, der Motorschwingungen oder anderer Signale, wie zum Beispiel des Öldruckverlaufs, ersetzt werden. Zusätzlich können mittels dieser Verfahren auch akustisch schlechte, aber voll funktionsfähige fehlerlose Brennkraftmaschinen von akustisch "guten" Brennkraftmaschinen getrennt werden. Akustisch "schlechte" Brennkraftmaschinen weisen beispielsweise ein raues Motorgeräusch oder ein Zahnradrasseln oder dergleichen auf. Für diese Verfahren sind teilweise eine große Anzahl von Betriebszuständen notwendig, um "gut" von "schlecht" oder "fehlerhaft" von "nicht fehlerhaft" trennen zu können. Manchmal sind diese Verfahren trotzdem zu wenig aussagekräftig, um überhaupt zielsichere Aussagen machen zu können.

Aufgabe der Erfindung ist es, diese Nachteile zu vermeiden und auf möglichst einfache Weise eine akustische und zuverlässige Qualitätskontrolle zu ermöglichen.

Erfindungsgemäß wird dies dadurch erreicht, dass die akustische Antwort der Brennkraftmaschine durch Änderung der Anregung mittels einer elektronischen Steuereinheit temporär erhöht wird, wobei zur Erhöhung der akustischen Antwort die Verbrennung in zumindest einem Zylinder abgeschaltet wird. Vorzugsweise kann dabei vorgesehen sein, dass eine Gruppe von Zylindern abgeschaltet wird. Die Abschaltung der Verbrennung kann durch Unterbinden der Kraftstoffeinspritzung und/oder durch Unterbinden der Zündung erfolgen.

Die Auswertung der akustischen Antwort erfolgt durch messtechnische Analyse zumindest eines indikativen Signals, vorzugsweise des Luftschalls, der Motorvibrationen und/oder des Öldruckverlaufs.

Das erfindungsgemäße Verfahren macht sich die bei heutigen Fahrzeugmotoren üblicherweise vorhandene elektronische Steuerung (ECU) zunutze, um akustische Anregungsphänomene zu generieren, die im normalen Motorbetrieb nicht vorhanden sind, da die akustische Antwort auf Fehler in der Fertigung oder im Bezug auf störende Motorgeräusche (akustisch schlechte Motoren) direkt von der Anregung durch mechanische und verbrennungsdruckbedingte Vorgänge in der Brennkraftmaschine abhängt.

Durch die Abschaltung zumindest eines Zylinders oder mehrerer beliebiger Zylinder kann - je nach Betriebszustand - auf einfache Weise diese Anregung deutlich erhöht werden. Dadurch können viel einfacher und eindeutiger Fehler in der Fertigung oder akustisch schlechte Motoren mit einer geringen Anzahl von Betriebszuständen schneller erkannt werden. Der Vorteil dieses Verfahrens ist, dass sowohl eine weitaus eindeutigere Fehlererkennung, als auch eine Zeitersparnis im Testlauf erreicht werden kann.

Die Änderung und somit Erhöhung, sowie Anpassung der Anregung an die zu untersuchenden oder zu detektierenden Fehler oder Geräuschphänomene erfolgt somit mittels der elektronischen Steuereinheit, indem die Verbrennung während des Motorbetriebs in beliebigen Zylinder, bzw. in einer beliebigen Anzahl von Zylindern oder zu beliebigen Zeitpunkten weggeschaltet wird. Dies gelingt bei Dieselmotoren durch Unterbindung der Einspritzung und bei Otto-Motoren durch Unterbindung der Zündung mittels der elektronischen Steuereinheit.

Damit wird die akustische Anregung der Brennkraftmaschine jeweils massiv verändert und kann an das jeweilige zu detektierende akustische Phänomen (z.B. Fehler oder akustisch schlechtes Motorgeräusch) zielgerichtet angepasst werden.

Fehler oder akustisch schlechtes Motorgeräusch kann somit wesentlich deutlicher und effizienter, sowie in kürzerer Zeit erkannt werden.

## Patentansprüche

1. Verfahren zur akustischen Qualitätskontrolle und zur Analyse einer akustischen Signatur einer Brennkraftmaschine, **dadurch gekennzeichnet, dass** die akustische Antwort der Brennkraftmaschine durch Änderung der Anregung mittels einer elektronischen Steuereinheit temporär erhöht wird, wobei zur Erhöhung der akustischen Antwort die Verbrennung in zumindest einem Zylinder abgeschaltet wird.

2. Verfahren nach Anspruch 1, **dadurch gekennzeichnet, dass** eine Gruppe von Zylindern abgeschaltet wird.

3. Verfahren nach Anspruch 1 oder 2, **dadurch gekennzeichnet, dass** die Abschaltung der Verbrennung durch Unterbinden der Kraftstoffeinspritzung und/oder durch Unterbinden der Zündung erfolgt.

4. Verfahren nach einem der Ansprüche 1 bis 3, **dadurch gekennzeichnet, dass** der Zeitpunkt und die Dauer der Zylinderabschaltung in Abhängigkeit des zu detektierenden akustischen Phänomens gewählt wird.

5. Verfahren nach einem der Ansprüche 1 bis 4, **dadurch gekennzeichnet, dass** die akustische Antwort durch messtechnische Analysen zumindest eines indikativen Signals, vorzugsweise des Luftschalls, der Motorvibrationen und/oder des Öldruckverlaufs, ausgewertet wird.

## Claims

1. Method for acoustic quality control and for analysing the acoustic signature of an internal combustion engine, **characterised in that** the acoustic response of the internal combustion engine is temporarily increased by changing the excitation via an electronic control unit, with combustion in at least one cylinder being switched off to increase acoustic response.

2. Method according to claim 1, **characterised in that** a group of cylinders is switched off.

3. Method according to claim 1 or 2, **characterised in that** suppression of combustion is carried out by stopping fuel injection and/or switching off ignition.

4. Method according to any of claims 1 to 3, **characterised in that** the point in time and the duration of cylinder suppression is chosen dependent on the acoustic phenomenon to be detected.

5. Method according to any of claims 1 to 4, **characterised in that** the acoustic response is evaluated by means of instrumented analysis of at least one indicative signal, preferably airborne sound, engine vibrations and/or oil-pressure over time.

## Revendications

1. Procédé de contrôle acoustique de qualité et d'analyse de la signature acoustique d'un moteur à combustion,
**caractérisé en ce qu'**
on augmente temporairement la réponse acoustique du moteur à combustion en modifiant l'excitation par une unité de commande électronique, et
* pour augmenter la réponse acoustique, on coupe la combustion dans au moins un cylindre.

2. Procédé selon la revendication 1,
**caractérisé en ce qu'**
on coupe un groupe de cylindres.

3. Procédé selon la revendication 1 ou 2,
**caractérisé en ce que**
la coupure de la combustion se fait par le blocage de l'injection de carburant et/ou par le blocage de l'allumage.

4. Procédé selon l'une des revendications 1 à 3,
**caractérisé en ce qu'**
on choisit l'instant et la durée de la coupure de cylindre en fonction du phénomène acoustique à détecter.

5. Procédé selon l'une des revendications 1 à 4,
**caractérisé en ce qu'**
on exploite la réponse acoustique par des analyses métrologiques d'au moins un signal indicatif, de préférence du signal aérien, des vibrations du moteur et/ou de l'évolution de la pression d'huile.
